**Europäisches Patentamt**

**European Patent Office**

**Office européen des brevets**

(19)

(11) Veröffentlichungsnummer: **0 092 825**
**B1**

# (12) EUROPÄISCHE PATENTSCHRIFT

(45) Veröffentlichungstag der Patentschrift:
28.01.87

(21) Anmeldenummer: **83104012.6**

(22) Anmeldetag: **23.04.83**

(51) Int. Cl.⁴: **G 01 S 17/10**, G 01 S 17/58,
F 42 C 13/04

(54) **Abstandssensor für einen Geschosszünder.**

(30) Priorität: **28.04.82 DE 3215845**

(43) Veröffentlichungstag der Anmeldung:
**02.11.83 Patentblatt 83/44**

(45) Bekanntmachung des Hinweises auf die Patenterteilung:
**28.01.87 Patentblatt 87/5**

(84) Benannte Vertragsstaaten:
**CH FR GB IT LI SE**

(56) Entgegenhaltungen:
**DE - A - 2 457 497**
**DE - A - 2 634 627**
**FR - A - 2 117 635**
**GB - A - 1 276 081**
**GB - A - 1 605 178**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **Dahm, Gerhard, Parkstrasse 3 d, D-5410 Höhr-Grenzhausen (DE)**
Erfinder: **Klink, Paul, Scheffelweg 4, D-6901 Wiesenbach (DE)**
Erfinder: **Wichmann, Günter, Riedwiesenweg 6, D-6906 Leimen (DE)**

(74) Vertreter: **Muschka, Wilhelm, Dipl.-Ing., Eltro GmbH Gesellschaft für Strahlungstechnik Kurpfalzring 106 Postfach 10 21 20, D-6900 Heidelberg 1 (DE)**

## Beschreibung

Die Erfindung bezieht sich auf einen Abstandssensor nach dem Oberbegriff des Anspruchs 1.

Die DE-A-2 457 497 behandelt eine Schaltungsanordnung für einen optischen Bodenabstandszünder. Um einen aus einem Echosignal eines emittierten Lichtimpulses gebildeten Messwert zu einem bestimmten Zeitpunkt abfragen und speichern zu können, findet hierbei ein Sample-Hold-Baustein Verwendung. Das Kommando zur Durchführung einer Messwertabfrage rührt von einer «Sampleansteuerung» her und gelangt in Form eines gegenüber den ausgesendeten Lichtimpulsen verzögerten Spannungsimpulses auf den Sample-Hold-Baustein. Diese bekannte Technik hat nichts mit der herkömmlichen Sampletechnik zu tun, wie sie in der Oszillagraphie für Höchstfrequenztechnik seit langem gebräuchlich ist und bei der viele tausend Einzelmessungen (Samples) einen sehr hochfrequenten Signalverlauf in winzige einzelne Zeitabschnitte zerlegen, um dadurch eine niederfrequente Abbildung des HF-Signalverlaufs zu erzielen. Eine solche charakteristische Nachbildung wird jedoch mit der bekannten Anordnung nicht erreicht.

Der Erfindung liegt die Aufgabe zugrunde, bei dem gattungsgemässen Abstandssensor die Auflösung zu verbessern. Diese Aufgabe wird erfindungsgemäss durch die im Anspruch 1 genannten Merkmale gelöst. Ein solcher Abstandssensor zeitigt wegen seiner hohen Entfernungsmessgenauigkeit bzw. Auflösung den Vorteil, dass sich mit ihm exakt derjenige Abstand und Zeitpunkt eines Geschosses oder Flugkörpers einstellen lässt, der die grösstmögliche Waffenwirkung ergibt.

Mit dem das Impulslaufzeitverfahren benutzenden Laserimpulssender können sehr kurze Impulse ausgestrahlt werden, deren Vorderflanke im Empfangskanal von weniger als 1 nsec bis etwa 2 nsec beträgt und dadurch ohne zusätzlichen Aufwand eine sehr genaue Abstandsmessung mit einer Toleranzbreite von $< \pm$ 5 cm ermöglicht. Die Pulsfolgefrequenz wird mit etwa 100 kHz bis mehrere MHz – je nach Annäherungsgeschwindigkeit und Sensorauslegung – sehr hoch gehalten, um auf der Empfängerseite über das der Erfindung zugrundeliegende Prinzip mit einem NF-Operationsverstärker eine niederfrequente Abbildung desjenigen Impulses zu erzeugen, der den Zündvorgang zum gewünschten Zeitpunkt einleitet.

Die von der Erfindung bewirkte Erhöhung des Signal/Rausch-Verhältnisses hat eine Steigerung der Systemempfindlichkeit zur Folge und die damit gewonnene Leistungsreserve kann zum Zweck eines grösseren Raumwinkels für eine Aufweitung des Laserstrahlenbündels verwendet werden. Wegen der Empfindlichkeit des Sensors für Impulse der ausgewählten Wellenlänge im Nanosekundenbereich, die ausserdem synchron zum Empfangsimpuls einfallen müssen, besitzt ein solcher Sensor eine extrem hohe Sicherheit gegen alle gewollten oder ungewollten Störreflexe von Sonne, Hintergrund und Gegner.

Da der Nadelimpuls selbst rauschbehaftet sein kann, ist es für hochempfindliche Systeme manchmal von Vorteil, dass eine Gegentaktschaltung verwendet wird, in der aus dem Empfangs- oder dem Nadelimpuls jeweils zwei gegenphasige Impulse erzeugt werden, die den Eingängen entgegengesetzter Polarität eines invertierenden Verstärkers zugeführt werden. Dabei hebt sich das Amplitudenrauschen des Nadelimpulses auf. Zweckmässigerweise ist hierbei die Zeitverzögerung des Nadelimpulses konstant.

Der erfindungsgemässe Abstandssensor kommt bei Artillerie-, Hubschrauber- und Panzermunition mit und ohne Hohlladung gut zur Geltung, weil der Lasersendestrahl jeweils so aufgeweitet werden kann, dass er im gewünschten Abstand Kaliberdurchmesser hat.

Der Erfindungsgegenstand bietet eine grosse Flexibilität bei der Anwendung von Algorithmen zur Ermittlung der Zieleigenschaften, Annäherungsgeschwindigkeiten, Auffasswinkel und Möglichkeiten zusätzlicher Kodierung, wenn man den Elektronikaufwand entsprechend erweitert. Der Unteranspruch 6 enthält deshalb im wesentlichen schaltungstechnische Weiterbildungen der Erfindung.

Von Vorteil kann auch sein, dass der Arbeitswiderstand frequenzabhängig (induktiv) ausgebildet ist. Ein solcher Widerstand stellt für den NF-Verstärker einen Kurzschluss dar, wodurch diese Methode gegen jede Art von Hintergrundstrahlung unempfindlich wird, da diese immer vergleichsweise niederfrequent moduliert ist. Selbst künstliche Impulse im Nanosekundenbereich stören nur, wenn sie synchron zum Nadelimpuls auftreten, so dass sie wahrgenommen werden, was aber relativ unwahrscheinlich ist.

Im folgenden werden an Hand einer Zeichnung Ausführungsbeispiele der Erfindung näher erläutert, wobei die in den einzelnen Figuren einander entsprechenden Teile dieselben Bezugszeichen aufweisen. Es zeigt

Fig. 1 das Impulsdiagramm eines herkömmlichen, in der HF-Oszillographie verwendeten Abtastverfahrens mittels eines Nadelimpulses,

Fig. 2 das elektronische Schaltbild zu Fig. 1 mit gegen das Signal phasenmoduliertem Nadelimpuls,

Fig. 3 eine Variante des Schaltbildes gemäss Fig. 2 mit gegenphasig erzeugtem Signal- oder Tastimpuls,

Fig. 4 die Prinzipskizze des erfindungsgemäss ausgerüsteten Projektils,

Fig. 5 ein sensorspezifisches Impulsdiagramm mit einem gegenüber Fig. 1 unmoduliertem Nadelimpuls (b),

Fig. 6 Blockdiagramm und Prinzipskizze des im Projektil gemäss Fig. 4 vorgesehenen Geschosszünders,

Fig. 7 einen Teil des Blockdiagramms gemäss Fig. 6 – modifiziert für sich herausgezeichnet,

Fig. 8 das Blockdiagramm für die Überwachung eines Entfernungsbereiches,

Fig. 9 zwei Prinzipskizzen für das Überwachen mehrerer Entfernungen, Fig. 10 eine Variante des aus dem Blockschaltbild gemäss Fig. 6 ersichtlichen Laserentfernungsmessers,

Fig. 11 das elektronische Schaltbild des den Nadelimpuls betreffenden Teils des Laserentfernungsmessers ähnlich Fig. 2 und

Fig. 12 ein die Nichtlinearität zwischen Empfangssignal und abtastendem Nadelimpuls verdeutlichendes Impulsdiagramm.

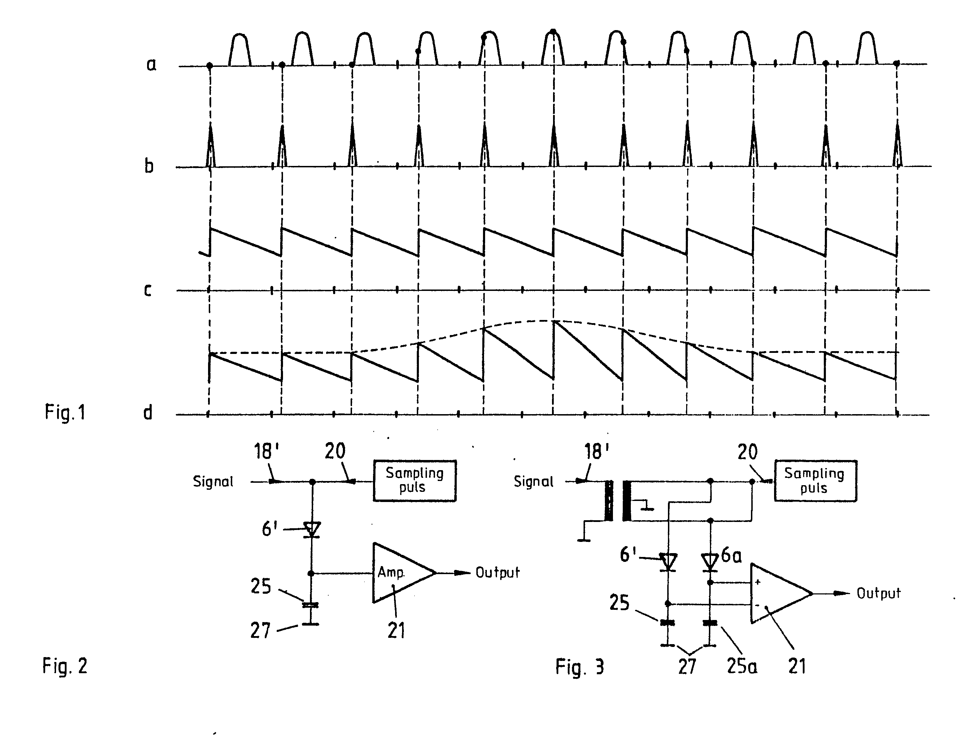

In Fig. 1a soll ein Signal, dessen Folgefrequenz bekannt ist, empfangen werden. Zu diesem Zweck wird nach Fig. 1b ein Nadelimpuls – auch als Samplingimpuls bezeichnet – erzeugt, der die gleiche Folgefrequenz aufweist wie der zu empfangende Signalimpuls, jedoch gegen diesen phasenmoduliert ist. Hierdurch trifft er von Periode zu Periode mit einem anderen Momentanwert des Signalimpulses zusammen.

Über die Diode 6' gemäss Fig. 2 werden beide – durch zwei gegenläufige Pfeile angedeutete – Impulse 18' und 20, von denen der Impuls 18' der Signal- und der Impuls 20 der Nadelimpuls ist, auf den anderenends an Masse 27 liegenden Kondensator 25 gegeben. Am Ausgang (output) des zwischen Diode und Kondensator geschalteten Verstärkers 21 entsteht sodann eine Sägezahnspannung, deren Spitzenamplitude der Summe beider Momentanwerte entspricht. Wäre das Eingangssignal Null, so würde ein Spannungsverlauf nach Fig. 1c entstehen. Bei Vorhandensein des Signalimpulses entsteht ein niederfrequentes Signal, das gemäss Fig. 1d einem zeitlich gedehnten Originalimpuls entspricht. Das bisher Gesagte ist nicht Gegenstand der Erfindung, sondern dient der Erläuterung des an sich bekannten Sampling-Verfahrens.

Da der Nadelimpuls 20 rauschbehaftet sein kann, ist es möglich, bei hochempfindlichen Systemen dem Amplitudenrauschen einer Schaltung gemäss Fig. 2 mit einer Gegentaktschaltung etwa gemäss Fig. 3 zu begegnen, wobei entweder der Signalimpuls 18' oder der Tastimpuls 20 – z.B. über einen Transformator – gegenphasig erzeugt dem subtrahierenden oder addierenden Verstärker 21 zugeführt wird. Diode und Kondensator des Gegentaktzweiges sind hierbei mit 6a bzw. 25a bezeichnet.

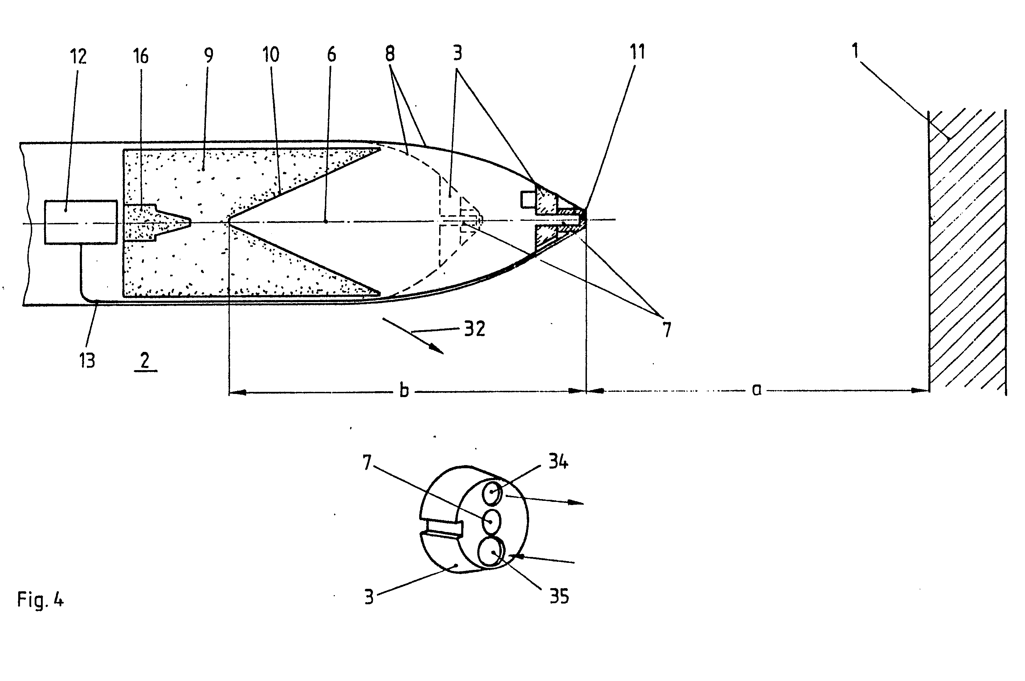

Zu den künftig wachsenden Schutzmassnahmen, beispielsweise einen Kampfpanzer betreffend, gehört u.a. auch eine Verstärkung seiner in Fig. 4 angedeuteten Aussenwand 1. Dies hat zur Folge, dass für seine wirksame Bekämpfung Projektile 2 grösseren Kalibers erforderlich werden. Dies wiederum bewirkt, dass der Zündpunkt – in der Fachsprache auch als Stand-off-Punkt bezeichnet – weiter vorverlegt werden muss, grössenordnungsmässig meist etwa 50 bis 200 cm vor das Ziel, was in Fig. 4 der Entfernung a + b entspricht.

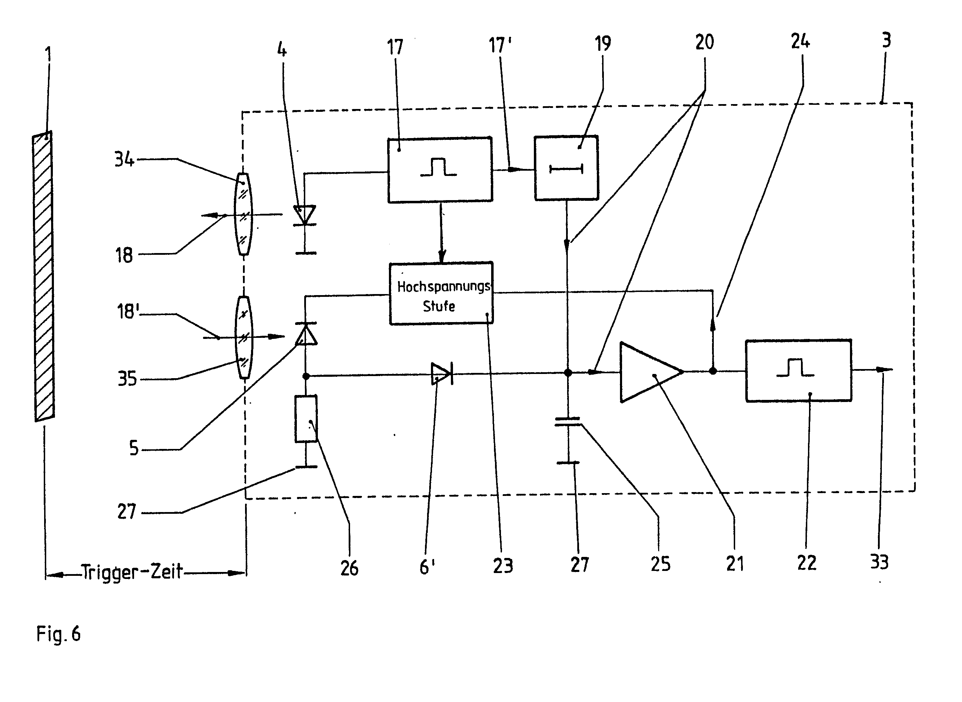

Mechanisch und sogar mit dem herkömmlichen Impulslaufzeitverfahren sind aber derlei genaue Abstandsmessungen wegen der fehlenden Entfernungsauflösung nicht mehr möglich. Das Projektil 2 wird daher an seiner Spitze mit einem nach dem erfindungsgemässen Vorschlag arbeitenden Laserentfernungsmesser 3 versehen, der unterhalb der Hauptfigur nochmals in vergrössertem Massstab für sich herausgezeichnet ist. Er besitzt die Sendeoptik 34 und die Empfangsoptik 35 mit optronischen Kanälen, die aus einer hinter diesen Optiken angeordneten Sender- bzw. Empfängereinheit mit den zugehörigen Dioden 4 bzw. 5 (Fig. 6) bestehen. Dieser Sensor kann als Abstands- oder Annäherungssensor ausgebildet sein und ist dergestalt symmetrisch zur Längsachse 6 angeordnet, dass zwischen Sender- und Empfängereinheit ein zentrischer Durchtritt 7 verbleibt. Dem Sensor liegt im rückwärtigen Bereich des Projektils 2 und im Abstand der Ogive 8 die Spitze der trichterförmig ausgebildeten und konzentrisch zur Längsachse 6 angeordneten Einlage 10 der Hohlladung 9 gegenüber, hinter der noch die Treibladung 16 vorgesehen ist. Nach Zündung derselben bildet sich aus der z.B. aus Kupfer bestehenden Einlage durch Materialverformung ein sogenannter Hohlladungsstachel. Derselbe durchstösst den Durchtritt 7 und dringt nach Aufschlag am Ziel in dessen Wand 1 ein. Aus Gründen der Funktionssicherheit kann im Bereich der Projektilspitze zusätzlich noch der Aufschlagzünder 11 vorgesehen sein, der dann mit der im Projektilinneren – gewöhnlich hinter der Treibladung 16 – angeordneten Zündkette 12 über das angedeutete Kabel 13 in elektrischer Verbindung steht. Aufschlagzünder 11 und Laserentfernungsmesser 3 können entweder an der äusseren oder aber – wie sowohl an der ausgezogen als auch an der gestrichelt dargestellten verkürzten Ogive 8 gezeigt – innerhalb der Projektilwand befestigt sein. Selbstverständlich ist es auch möglich, dass das beschriebene Projektil neben der Panzer- auch zur Artillerie- oder Hubschrauberbekämpfung eingesetzt werden kann.

Für den Fall, dass das Projektil 2 ein sogenannter Schultertreffer wird, das heisst nach einer kurzen Berührung des Ziels von diesem weg in eine andere Richtung abgelenkt wird, verfehlt der Hohlladungsstachel seine Wirkung. Trotzdem kann auch hier noch ein gewisser Erfolg erzielt werden, sofern das Projektil Splittermunition mit sich führt.

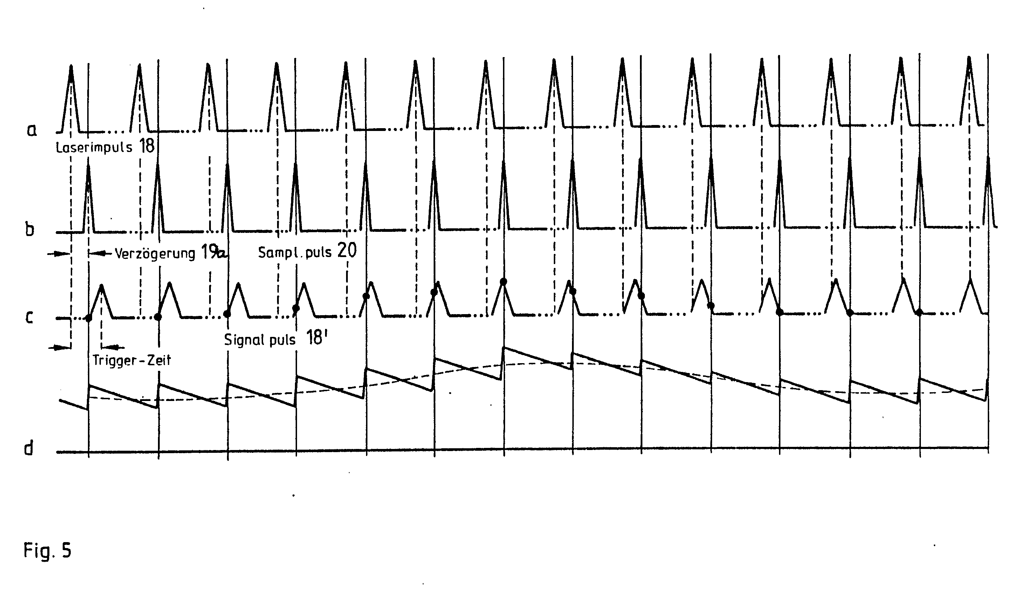

Für das Sensieren eines definierten Abstandes zum Ziel ergibt sich folgender aus Fig. 6 ersichtlicher elektronischer Aufbau: Ein Impulsgenerator 17 erzeugt eine Spannung, so dass die Sendediode 4 nach optronischer Umwandlung den Laserpuls 18 aussendet, wie er in Fig. 5a dargestellt ist. Über eine vom Pulsgenerator gesteuerte Hochspannungsstufe 23 wird die Empfangsdiode 5 vorgespannt (Bias). Ein kleiner Teil 17' der impulsförmigen Treiberspannung wird ausgekoppelt und nach Durchlaufen des Verzögerungsgliedes 19 als Nadelimpuls 20 gemäss Fig. 5b verwendet. Die Verzögerungszeit 19a wird dabei so eingestellt, dass sie dem zu detektierenden vorbestimmten Weg des Laserimpulses von der Sendediode 4 zum Ziel 1 und wieder zurück zur Empfangsdiode 5 entspricht. Fliegt der Sensor 3 einem Ziel entgegen, so wird zunächst kein Signal empfangen, da es nicht mit dem Nadelimpuls 20 zusammentreffen kann. Kommt das Ziel näher, so läuft sein Signal 18′ – in Blickrichtung von links kommend – entsprechend Fig. 5c von Periode zu Periode in den Nadelimpuls hinein und wird von diesem abgetastet. Die üblicherweise in der Sampling-Technik notwendige Phasenmodulation des Nadelimpulses 20 ist hier nicht mehr notwendig. Das am Kondensator 25 verzögerungsfrei entstehende NF-Impulssignal gemäss Fig. 5d gelangt dann über den NF-Verstärker 21 und über einen Impulsformer 22, der den Zündtriggerimpuls 33 liefert. Wird aus Empfindlichkeitsgründen als Empfangsdiode eine Silizium-Avalanche-Diode verwendet, so muss – wie bereits ausgeführt – für diese noch die Biasspannung erzeugt werden. Dies geschieht durch Gleichrichtung der Impulsgeneratorspannung mit einer zusätzlichen automatischen Regelung, wobei als Kriterium das Ausgangsrauschen 24 des NF-Verstärkers 21 herangezogen werden kann. Während bei der Darstellung nach Fig. 5 lediglich etwa 10 Impulse zur Abbildung des NF-Impulses gezeichnet sind, liegen die Verhältnisse in der Praxis so, dass je nach Anwendungsfall ca. 100 bis 1000 Impulse zur Abbildung zur Verfügung stehen. Dies bedeutet eine beachtliche Steigerung der erreichbaren Empfindlichkeit, da das Signal/Rauschverhältnis mit der Wurzel aus der Anzahl der integrierten Impulse steigt. Dies wiederum hat zur Folge, dass bei Anwendungsfällen mit einer bestimmten Laserleistung grössere Winkelbereiche überwacht werden können.

Die Annäherungsgeschwindigkeit Sensor-Ziel bestimmt die Frequenz des NF-Impulses. Damit lässt sich die Bandbreite des NF-Verstärkers 21 dem zu erwartenden Signalimpuls 18′ anpassen. Beträgt die Annäherungsgeschwindigkeit z.B. 1m/ms und die Länge des Impulses bei 2 ns Dauer 60 cm, so wird der Impuls, da er die Strecke hin und zurück durchlaufen muss, bei 30 cm Wegänderung abgebildet. Dies bedeutet, dass er nunmehr eine Dauer von ca. 300 μs hat und mit einer Bandbreite von nur einigen Kilohertz verstärkt werden kann. Falls notwendig, kann der Sensor 3 also auch in gewissen Grenzen geschwindigkeitsselektiv ausgelegt werden. Da der Arbeitswiderstand 26 der Empfangsdiode 5 nur für Nanosekundenimpulse vorhanden sein muss, kann er frequenzabhängig (induktiv) ausgebildet werden, so dass er für die Frequenzen, die im NF-Verstärker 21 verarbeitet werden müssen, einen Kurzschluss darstellt.

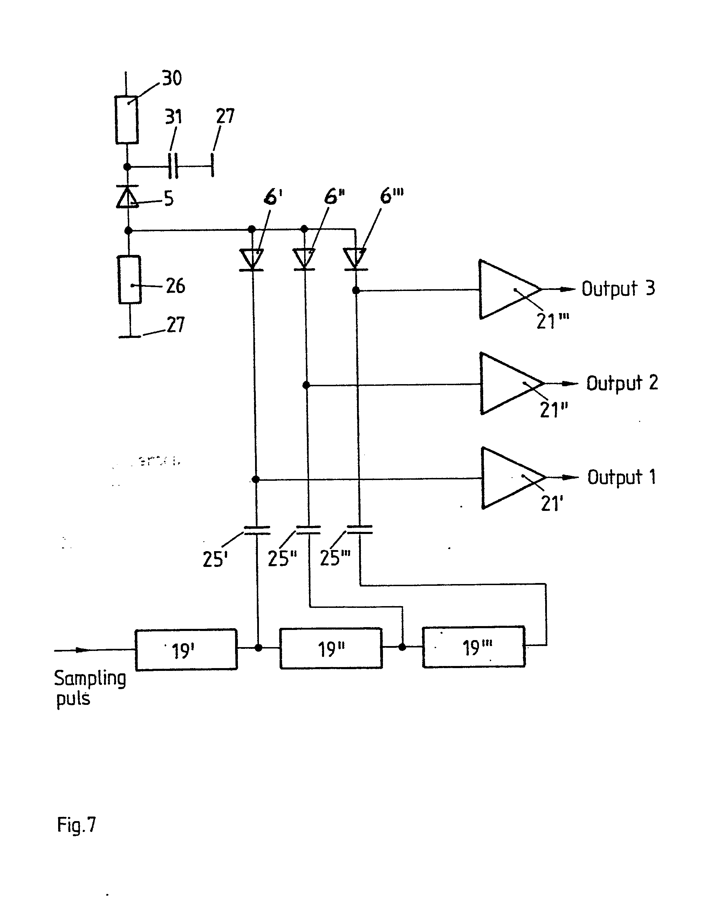

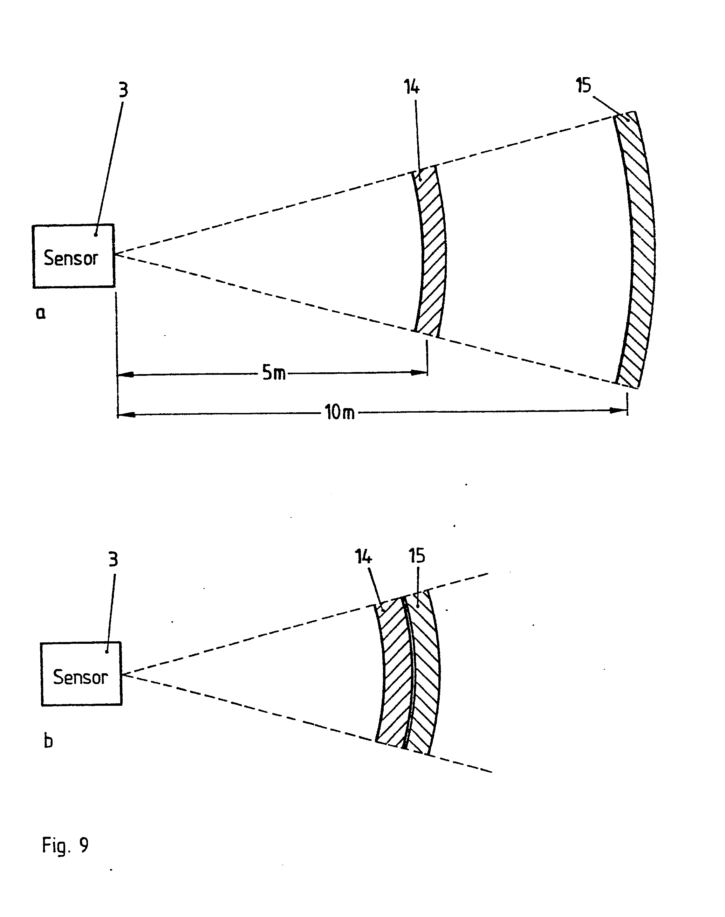

Soll das Annäherungsverhalten eines Zieles genauer festgestellt werden oder sollen zusätzliche Informationen über das Ziel gesammelt werden, so müssen zuweilen mehrere Entfernungstore 14, 15 (Fig. 9) gleichzeitig überwacht werden. Dies ist nach Fig. 7 dadurch möglich, dass für jedes Entfernungstor ein Verzögerungsglied 19′ bzw. 19″ bzw. 19‴ usw., eine Schaltdiode 6′ bzw. 6″ bzw. 6‴ usw., ein Ladekondensator 25′ bzw. 25″ bzw. 25‴ usw. und ein NF-Verstärker 21′ bzw. 21″ bzw. 21‴ usw. eingeführt werden.

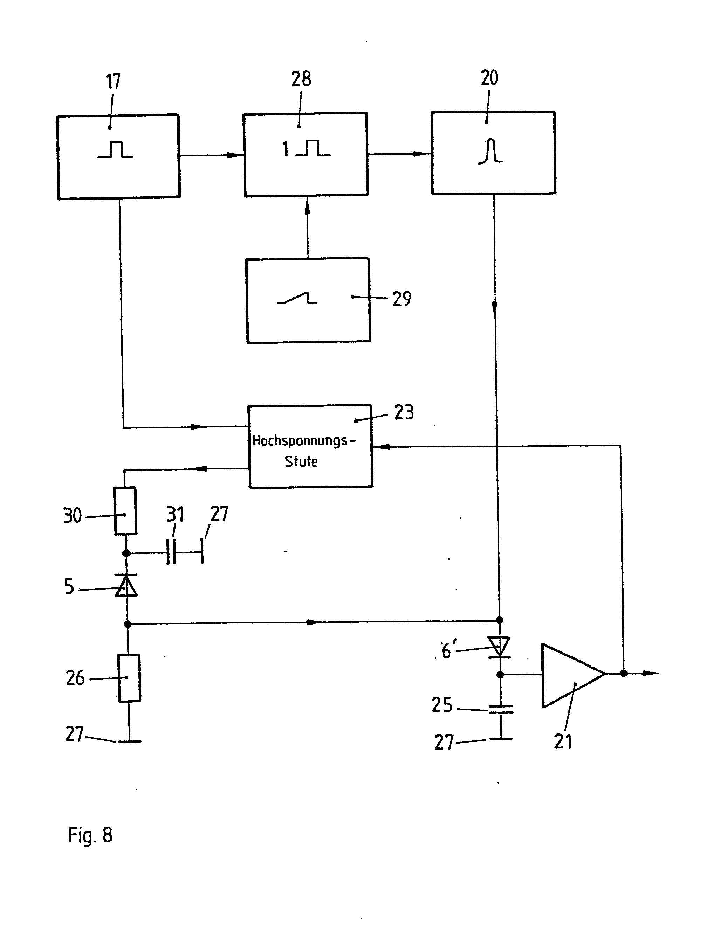

Für die Überwachung eines Entfernungsbereiches ist gemäss Fig. 8 eine Phasenmodulation des Nadelimpulses notwendig. Der Impulsgenerator 17 kann dabei als Trigger für eine Monoflopstufe 28 verwendet werden, deren Zeitkonstante durch eine Modulationsspannung 29 variiert wird. Aus der Rückflanke des Monoflopimpulses wird dann der Nadelimpuls gewonnen. Der überwachte Bereich kann beliebig eingestellt werden. Er kann sowohl von Null bis zur maximalen Reichweite als auch – etwa gemäss Fig. 9a – zwischen zwei Entfernungen, also z.B. von 5 bis 10 m eingestellt werden. Selbstverständlich ist auch die gleichzeitige Überwachung mehrerer Bereiche, durch Verwendung mehrerer getrennter Nadelimpulse möglich, wie z.B. eines ersten Bereichs von 1 bis 5 m, eines zweiten von 10 bis 20 m usw.

Durch das gleichzeitige Überwachen mehrerer Entfernungen, und dies gilt auch für einen Entfernungsbereich, kann die Relativgeschwindigkeit zwischen Sensor und Ziel gemäss Fig. 9a dadurch festgestellt werden, dass die Zeit gemessen wird, die vergeht, bis das Ziel vom beispielsweise zweiten Entfernungstor 15 in das erste Entfernungstor 14 gelangt.

Eine weitere Möglichkeit einer solchen Überwachung besteht darin, dass beim Durchlaufen des zweiten Entfernungstores 15 festgestellt wird, ob das Ziel eine einzelne Reflexion liefert oder ob mehrere zeitlich aufeinanderfolgende Reflexionen erscheinen. Das Signal wird dann analysiert und es kann entschieden werden, ob überhaupt eine Auslösung erfolgen soll oder ob etwa die Auslösung erst auf den zweiten oder dritten Signalimpuls ansprechen soll. Dieses Ergebnis kann dann einer Auswertestufe des ersten eigentlichen Entfernungstores «mitgeteilt» werden, so dass dessen Ausgangssignale, sobald sie auftreten, d.h. das analysierte Ziel sich in der eigentlichen Auslöseentfernung befindet, z.B. blockiert oder erst für den zweiten oder dritten Signalimpuls freigegeben werden.

Eine solche Schaltung kann beispielsweise dazu verwendet werden, den Sensor absolut unempfindlich zu machen gegen Schnee und Regen. In diesem Fall würde ein Signal im zweiten Entfernungstor 15, das durch Schnee verursacht wird, das gleichfalls durch Schnee verursachte Signal im ersten Entfernungstor 14 blockieren. Erst wenn der Sensor sich dem Ziel soweit genähert hat, dass die zweite Entfernung nicht mehr gesehen werden kann, würde das Sperrsignal verschwinden und der Sensor würde ein Ausgangssignal liefern. Hier müssen sich das erste und das zweite Entfernungstor gemäss Fig. 9b berühren oder leicht überlappen.

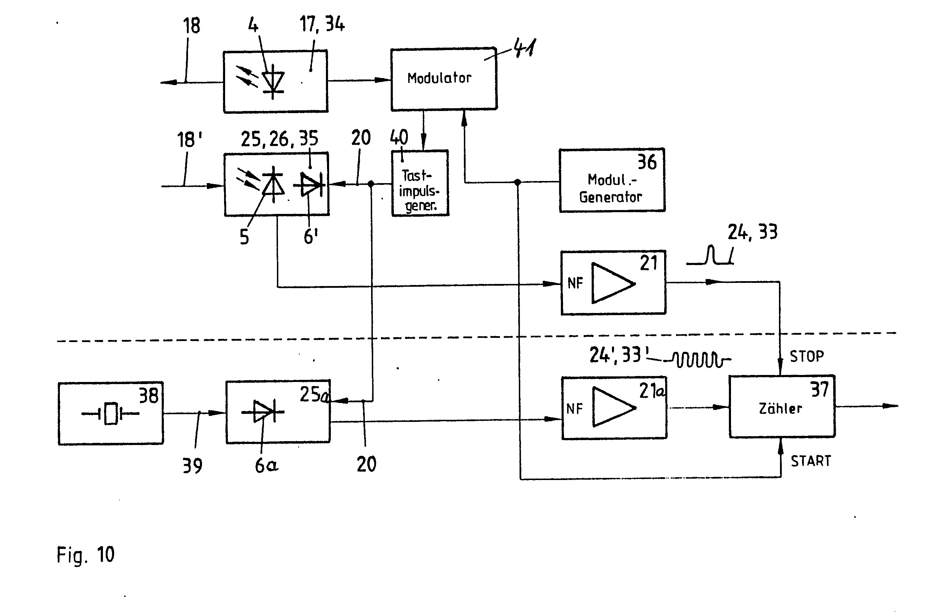

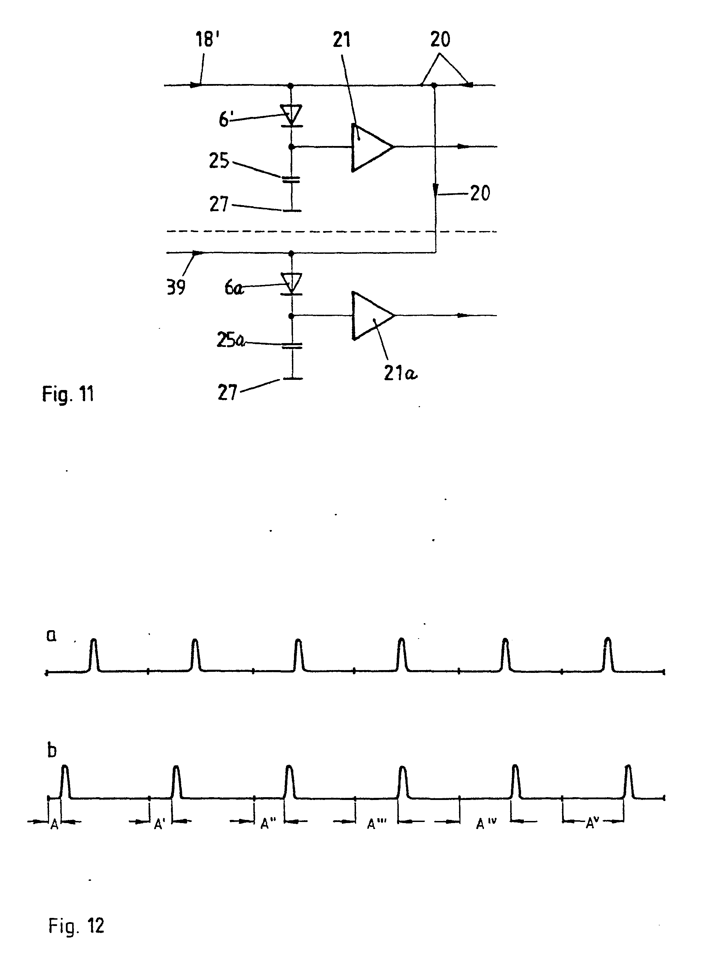

In Fig. 10 und 11 wird wiederum ein bestimmter Anteil 18′ des von dem Sender 4, 17, 34 ausgestrahlten Lasersenderimpulses 18, dessen Folgefrequenz bekannt ist, nach Reflexion an einem in der Zeichnung nicht dargestellten Ziel, von dem Empfänger 5, 6′, 25, 26, 35 empfangen. Zu diesem Zweck wird in dem Bauteil 40 der Nadelimpuls 20 – im Laborjargon auch als Samplingimpuls bezeichnet – erzeugt, der von dem Senderimpuls abgeleitet ist und die gleiche Folgefrequenz aufweist wie der Empfangsimpuls 18′, jedoch gegenüber diesem durch den Modulator 41 phasenmoduliert ist. Hierdurch trifft der Nadelimpuls 20 von Periode zu Periode mit einem anderen Momentanwert des Senderimpulses 18 bzw. dessen reflektiertem Anteil 18' zusammen. Man sagt auch, der Empfangsimpuls wird von dem Nadelimpuls abgetastet.

In der Folge gelangen Empfangsimpuls 18' und Nadelimpuls 20 über die Diode 6' auf den Kondensator 25 (Fig. 11). Zwischen Diode und Kondensator zweigt der Verstärker 21 ab. Es entsteht wieder das niederfrequente, einem zeitlich gedehnten Originalimpuls entsprechende Signal 24, 33 (Fig. 10). Eine in den Fig. 10 und 11 gestrichelt eingezeichnete Markierungslinie grenzt zeichnerisch das bisher Gesagte, das auch bereits Fig. 6 zu entnehmen ist, gegenüber dem in der Folge Beschriebenen ab.

Fig. 12 zeigt nun bei a) einen Impuls des am Ziel reflektierten Lasersignals 18', während bei b) mit A bis $A^V$ die durch die Phasenmodulation des abtastenden Nadelimpulses 20 erzeugte variable Verzögerung gegenüber ersterem Impuls angedeutet ist. Diese variable Verzögerung erfordert für extrem genaue Entfernungsmessungen eine so hohe Linearität, wie sie in der Praxis nicht realisierbar ist. Um diese hohe Linearität überflüssig zu machen, wird vorgeschlagen, über das in den Fig. 10 und 11 unterhalb der gestrichelten Markierungslinie dargestellte zweite Empfangssystem die Signale des Quarzoszillators 38 zu empfangen, deren niederfrequentes Abbild 24' und 33' auf der Zeitachse genau die gleichen Linearitätsfehler enthält wie sie auf der Zeitachse des NF-Abbildes des Senderimpulses entstehen. Voraussetzung hierbei ist, dass der Nadelimpuls 20 für beide Systeme derselbe ist.

Wie die Fig. 10 und 11 erkennen lassen, speist der Oszillator 38 die weitere Empfängereinheit 6a, 25a, die von demselben Nadelimpuls 20 abgetastet wird. Oszillatorschwingungen 39 und Nadelimpuls 20 gelangen wieder über eine Diode, die Diode 6a, auf einen Kondensator, der hier die Bezugszahl 25a trägt. Zwischen Diode und Kondensator zweigt der Verstärker 21a ab. An dem Kondensator entsteht auch hier ein NF-Abbild, in diesem Fall der hochfrequenten Oszillatorschwingungen.

In Fig. 10 wird sodann über den NF-Verstärker 21a das verstärkte Signal 24', 33' gewonnen, welches dem Zähler 37 zugeführt wird. Letzterer wird durch einen von dem Modulationsgenerator 36 gewonnenen Impuls bei jedem neuen Niederfrequenzvorgang gestartet und zählt die Nulldurchgänge des niederfrequenten Abbildes des HF-Quarzoszillators 38 bis zum Eintreffen des Stoppsignals, was aus dem Signalimpuls der Empfängereinheit 5, 6', 25, 26, 35 herrührt. Hierbei entfallen alle Fehler, die bei der Phasen- bzw. Laufzeitmodulation des Nadelimpulses enstehen.

Ein solcher Laserentfernungsmesser ist z.B. für einen Abstandssensor verwendbar. Er ist aber grundsätzlich für alle Verwendungszwecke, bei denen auf weite Entfernungen mit grosser Genauigkeit gemessen werden soll, einsetzbar. Als weiteres Beispiel sei etwa das Brückenschlagen durch Pioniere erwähnt.

## Patentansprüche

1. Abstandssensor für einen Geschosszünder mit
- einem Laserimpulssender (4, 17, 34) zur Aussendung von Lichtimpulsen (18),
- einer Empfangsdiode (5) zur Umsetzung von an einem im Wege der ausgesendeten Lichtimpulse befindlichen Ziel (1) reflektierten Lichtimpulsen in elektrische Empfangssignale (18'),
- einer Abtastschaltung (17, 19, 25) zur Abtastung der Empfangssignale durch mit den Lichtimpulsen synchronisierte, gegenüber diesen jedoch in vorgegebener Weise verzögerte Abtastimpulse (20),
- einen von den erhaltenen Abtastwerten beaufschlagten NF-Verstärker (21), der für eine im Vergleich zur Folgefrequenz der Lichtimpulse niedere Frequenz ausgelegt ist,
- einer dem NF-Verstärker nachgeschalteten Triggerschaltung (22) zur Auslösung von Zündbefehlen (33),
dadurch gekennzeichnet, dass
–die Abtastimpulse als im Vergleich zur Dauer der Empfangsimpulse kurze Nadelimpulse ausgebildet sind, so dass im Falle einer Relativbewegung zwischen dem Abstandssensor (3) und einem Ziel (1) aufgrund der damit verbundenen Phasenverschiebung zwischen den Empfangssignalen und den Nadelimpulsen eine Folge von Abtastwerten erzeugt wird, welche die Amplitudenwerte aufeinanderfolgender Empfangssignale zu jeweils unterschiedlichen Zeitpunkten dieser Signale repräsentieren,
- in der Abtastschaltung Mittel (25) zur Umsetzung der Folge von Abtastwerten in ein niederfrequentes Impulsabbild der Empfangssignale vorgesehen sind,
- der Frequenzbereich des NF-Verstärkers (21) an den des niederfrequenten Impulsabbildes angepasst ist.

2. Abstandssensor nach Anspruch 1, dadurch gekennzeichnet, dass die Abtastschaltung eine Gegentaktschaltung enthält, in der aus den Empfangssignalen oder den Nadelimpulsen jeweils zwei gegenphasige Impulse erzeugt werden, die den Eingängen entgegengesetzter Polarität eines invertierenden Verstärkers zugeführt werden, und dass an diese Eingänge ausserdem die Nadelimpulse oder die Empfangssignale mit jeweils derselben Polarität angelegt werden.

3. Abstandssensor nach Anspruch 1 oder 2, dadurch gekennzeichnet, dass die Zeitverzögerung der Nadelimpulse (20) bezüglich der Lichtimpulse konstant ist.

4. Abstandssensor nach einem der vorausgehenden Ansprüche, dadurch gekennzeichnet, dass der Lasersendestrahl so aufgeweitet ist, dass er im gewünschten Abstand Geschosskaliberdurchmesser hat.

5. Abstandssensor nach einem der vorausgehenden Ansprüche, dadurch gekennzeichnet, dass
a) die von einem Impulsgenerator (17) über eine Hochspannungsstufe (23) vorgespannte Empfangsdiode (5) mit einem anderenends an Masse (27) liegenden Arbeitswiderstand (26) verbunden ist, wobei der Verbindungspunkt über eine Schaltdiode (6′) an den NF-Verstärker und die Triggerschaltung (22) geschaltet ist,

b) vom Impulsgenerator ausgekoppelte und über ein Verzögerungsglied (19) geführte Impulse (20) als Nadelimpulse unmittelbar an den NF-Verstärker gelegt sind, während ein Teil (24) des verstärkten Rauschsignals als die Hochspannungsstufe automatisch regelnde Regelkenngrösse unmittelbar vom Ausgang des NF-Verstärkers auf diese Stufe rückgeführt ist, und

c) die Mittel zur Umsetzung der Folge von Abtastwerten in ein niederfrequentes Impulsabbild einen einerseits am Eingang des NF-Verstärkers (21) und andererseits an Masse (27) liegenden Kondensator (25) aufweisen.

6. Abstandssensor nach einem der Ansprüche 1 bis 4, dadurch gekennzeichnet, dass

a) die von einem die Lichtimpulse (18) auslösenden Impulsgenerator (17) über eine Hochspannungsstufe (23) vorgespannte Empfangsdiode (6′) mit einem anderenends an Masse (27) liegenden Arbeitswiderstand (26) verbunden ist,

b) weitere NF-Verstärker (21, 21″, 21‴) vorgesehen sind,

c) die Abtastschaltung eine der Anzahl der NF-Verstärker entsprechende Anzahl von Verzögerungsgliedern (19′, 19″, 19‴) aufweist, die in Serie geschaltet sind und deren erste mit einem vom Impulsgenerator ausgekoppelten Impuls beaufschlagt ist,

d) zwischen den Verbindungspunkt der Empfangsdiode (5) mit dem Arbeitswiderstand (26) einerseits und jeden Ausgang der Verzögerungsglieder andererseits jeweils eine Serienschaltung aus einer Schaltdiode (6, 6″, 6‴) und einem Kondensator (25′, 25″, 25‴) gelegt ist,

e) jedem NF-Verstärker jeweils die Spannung an einem der Kondensatoren zugeführt ist.

7. Abstandssensor nach Anspruch 5 oder 6, dadurch gekennzeichnet, dass der Arbeitswiderstand (26) frequenzabhängig – als Kurzschluss für den oder die NF-Verstärker (21) – ausgebildet ist.

**Claims**

1. A range sensor for a projectile detonator, comprising

– a laser pulse transmitter (4, 17, 34) for emitting light pulses (18),

– a receiving diode (5) for converting light pulses reflected by a target (1) in the path of the emitted light pulses into electrical received signals (18′),

– a scanning circuit (17, 19, 25) for scanning the received signals by scanning pulses (20) synchronised with but delayed in a predetermined manner with respect to the light pulses,

– a low freqency amplifier (21) to which the received scanning values are applied and which is arranged to amplify at a frequency which is low in comparison with the repetition frequency of the light pulses.

– downstream of the low frequency amplifier, a trigger circuit (22) for triggering detonation commands (33), characterised in that

– the scanning pulses take the form of needle pulses which are short compared with the duration of the received pulses, so that with relative movement of the range sensor with respect to a target (1), and by virtue of the resulting phase shift between the received signals and the needle pulses, a sequence of scanning values is generated representing the amplitude values of consecutive received signals at varying instants within these signals,

– in that there are, in the scanning circuit, means (25) for converting the series of scanning values into a lower frequency pulse image of the received signals,

– and in that the frequency range of the low frequency amplifier (21) is adapted to that of the low frequency pulse image.

2. A range sensor according to claim 1, characterised in that the scanning circuit comprises a push-pull circuit in which, from the received signals or the needle pulses, in each case two opposite phase pulses are generated, which are fed to the opposite polarity inputs of an inverting amplifier, and in that the needle pulses or the received signals of in each case the same polarity are also applied to these inputs.

3. A range sensor according to claims 1 or 2, characterised in that the time delay between the needle pulses (20) and the light pulses is constant.

4. A range sensor according to one of the preceding claims, characterised in that the laser transmitter beam diverges so that, at the desired distance, its diameter is the calibre of the projectile.

5. A range sensor according to one of the preceding claims, characterised in that

a) the receiving diode (5), biased by a pulse generator (17) via a high-voltage stage (23), is connected to a working resistance (26) which has its other end connected to earth (27), the point of connection being linked via a switching diode (6′) to the low frequency amplifier and the trigger circuit (22),

b) pulses (20) brought out from the pulse generator and conducted via a delay line (19) are applied as needle pulses directly to the low frequency amplifier, while a part (24) of the amplified noise signal as a control parameter for automatically controlling the high-voltage stage, is fed back directly from the output of the low frequency amplifier to this stage, and

c) the means of converting the series of scanning values into a low frequency pulse image comprise a capacitor (25) coupled at one end to the input of the low frequency amplifier (21) and at the other to earth (27).

6. A range sensor according to one of claims 1 to 4, characterised in that

a) the receiving diode (6′), biased via a high voltage stage (23) by a pulse generator (17) which triggers the light pulses, is connected to a working resistance (26) the other end of which is connected to earth (27),

b) further low frequency amplifiers (21', 21'', 21''') are provided,

c) the scanning circuit has a number of delay lines (19', 19'', 19''') corresponding to the number of low frequency amplifiers and connected in series, the first of which has applied to it a pulse fed from the pulse generator,

d) between the point of connection of the receiving diode (5) to the working resistance (26) on the one hand and each output of the delay lines on the other there is in each case a series circuit comprising a switching diode (6', 6'', 6''') and a capacitor (25', 25'', 25'''),

e) in each case, the voltage at one of the capacitors is fed to each low frequency amplifier.

7. A range sensor according to claim 5 or 6, characterised in that the working resistance (26) is frequency-dependent, and is a short-circuit for the low frequency amplifier or amplifiers (21).

**Revendications**

1. Capteur de distance pour un dispositif d'amorçage de projectile, comportant:

— un émetteur laser d'impulsion (4, 17, 34) servant à émettre des impulsions lumineuses (18),

— une diode réceptrice (5) servant à convertir des impulsions lumineuses réfléchies par une cible (1) située sur le trajet des impulsions lumineuses émises, en des signaux électriques de réception (18'),

— un circuit d'exploration (17, 19, 25) pour explorer les signaux de réception à l'aide d'impulsions d'exploration (20) synchronisées avec les impulsions lumineuses, mais retardées de façon prédéterminée par rapport à ces dernières,

— un amplificateur basse fréquence (21), recevant les valeurs d'exploration obtenues et qui est conçu pour une fréquence inférieure à la fréquence de récurrence des impulsions lumineuses,

— un circuit déclencheur (22) branché en aval de l'amplificateur basse fréquence et servant à déclencher des instructions d'amorçage (33), caractérisé en ce que

— les impulsions d'exploration sont émises sous la forme d'impulsions en pic possédant une brève durée par rapport à la durée des impulsions de réception, de sorte que, dans le cas d'un déplacement relatif entre le capteur de distance (3) et une cible (1) se trouve produite, sur la base du déphasage, qui y est lié, entre les signaux de réception et les impulsions en pic, une suite de valeurs d'exploration, qui représentent les valeurs d'amplitude de signaux de réception successifs à des instants respectivement différents de ces signaux,

— dans le circuit d'exploration sont disposés des moyens (25) servant à convertir la suite de valeurs d'exploration en une image sous forme d'impulsions à basse fréquence des signaux reçus,

— la plage des fréquences de l'amplificateur basse fréquence est adaptée à l'image des impulsions à basse fréquence.

2. Capteur de distance selon la revendication 1, caractérisé en ce que le circuit d'exploration contient un circuit symétrique, dans lequel se trouvent produites, à partir des signaux de réception ou des impulsions en pic, respectivement deux impulsions en position de phase, qui sont envoyées aux entrées possédant des polarités opposées d'un amplificateur inverseur, et qu'en outre les impulsions en forme de pic ou les signaux de réception sont appliquées avec la même polarité respective à ces entrées.

3. Capteur de distance selon la revendication 1 ou 2, caractérisé en ce que le retard des impulsions en pic (20) par rapport aux impulsions lumineuses est constant.

4. Capteur de distance selon l'une des revendications précédentes, caractérisé par le fait que le faisceau d'émission laser est élargi de telle sorte qu'il possède, à la distance désirée, le diamètre calibré d'un projectile.

5. Capteur de distance selon l'une des revendications précédentes, caractérisé en ce que:

a) la diode réceptrice (5), qui est polarisée par un générateur d'impulsions (17) par l'intermédiaire d'un étage à haute tension (23), est reliée à une résistance de travail (26) raccordée par ailleurs à la masse (27), le point de jonction étant raccordé par l'intermédiaire d'une diode de commutation (6') à l'amplificateur basse fréquence et au circuit déclencheur (22).

b) des impulsions (20) découplées par rapport au générateur d'impulsions et envoyées par l'intermédiaire d'un circuit de retard (19) sont appliquées, en tant qu'impulsions en pic, directement à l'amplificateur à basse fréquence, tandis qu'une partie (24) du signal parasite amplifié est renvoyée, en tant que paramètre de réglage réglant de façon automatique l'étage à haute tension, directement de la sortie de l'amplificateur à basse fréquence à cet étage, et

c) des moyens servant à convertir la suite de valeurs d'exploration en une suite d'impulsions à basse fréquence comportent un condensateur (25) raccordé d'une part à l'entrée de l'amplificateur basse fréquence (22) et d'autre part à la masse (27).

6. Capteur de distance selon l'une des revendications 1 à 4, caractérisé en ce que:

a) la diode réceptrice (6'), qui est polarisée par l'intermédiaire d'un étage à haute tension (23) par un générateur d'impulsions (17) déclenchant les impulsions lumineuses (18), est reliée à une résistance de travail (26) raccordée par ailleurs à la masse (27),

b) il est prévu d'autres amplificateurs basse fréquence (21, 21'', 21'''),

c) le circuit d'exploration comporte un nombre, correspondant au nombre des amplificateurs basse fréquence, de circuit de retard (19', 19'', 19'''), qui sont branchés en série et dont le premier est excité par une impulsion découplée du générateur d'impulsions,

d) un circuit série formé d'une diode de commutation (6', 6'', 6''') et d'un condensateur (25', 25'', 25''') est branché respectivement entre le point de jonction de la diode réceptrice (5) et de la résistance de travail (26) d'une part puis chaque sortie des circuits de retard,

e) la tension présente aux bornes de l'un des condensateurs est envoyée respectivement à chaque amplificateur basse fréquence.

7. Capteur de distance selon la revendication 5 ou 6, caractérisé en ce que la résistance de travail (26) est réalisée de manière à être dépendante de la fréquence – sous la forme d'un court-circuit pour le ou les amplificateurs basse fréquence (21).

a

b

c

d

Fig.1

Signal — 18'  6'  25  27  20  Sampling puls

Amp.  21  Output

Fig. 2

Signal — 18'  6'  25  25a  27  20  Sampling puls

6a  21  Output

Fig. 3

9

Fig. 4

0 092 825

a

Laserimpuls 18

b

Verzögerung 19 Sampl.puls 20

c

Trigger-Zeit Signalpuls 18'

d

Fig. 5

0 092 825

Fig. 6

0 092 825

Output 3

Output 2

Output 1

Sampling
puls

Fig.7

17

0 092 825

Fig. 8

Fig. 9

Fig. 10

Fig. 11

Fig. 12